# EUROPÄISCHE PATENTSCHRIFT

(11) **EP 1 611 211 B1**
(45) Veröffentlichungstag und Bekanntmachung des Hinweises auf die Patenterteilung: **28.02.2007**
(21) Anmeldenummer: 04721529.8
(22) Anmeldetag: 18.03.2004
(51) Int. Cl.: C09D 5/04, C04B 26/28, C04B 40/00, C04B 41/50, C04B 41/85, B22C 3/00

(54) **RHEOLOGISCHES ADDITIV**
RHEOLOGIC ADDITIVE
ADDITIF RHEOLOGIQUE

(30) Priorität: 19.03.2003 DE 10312203
(43) Veröffentlichungstag der Anmeldung: 04.01.2006
(73) Patentinhaber: Ashland Südchemie-Kernfest Gmbh, 40721 Hilden (DE); Georg Fischer GmbH, 04249 Leipzig (DE)
(72) Erfinder: STÖTZEL, Reinhard, 46325 Borken (DE); PITAMITZ, Herbert, 42113 Wuppertal (DE); BERGER, Lothar, 04178 Leipzig (DE); HEINRICH, Matthias, 04229 Leipzig (DE)
(74) Vertreter: Vossius & Partner
(86) Internationale Anmeldenummer: PCT/EP2004/002856
(87) Internationale Veröffentlichungsnummer: WO 2004/083321

(56) Entgegenhaltungen:
- EP-A- 0 509 202
- US-A- 5 120 465
- US-A- 5 735 943

## Beschreibung

Die vorliegende Erfindung betrifft ein rheologisches Additiv, welches zur Steuerung des Auftragsverhaltens einer Beschichtungsmasse für poröse Körper verwendbar ist, sowie Beschichtungsmassen und beschichtete poröse Körper, die ein rheologisches Additiv umfassen.

Das Beschichten poröser Stoffe ist eine Technik, die vor allem in der Bearbeitung von Kernen oder Formen für den Gießereieinsatz von Bedeutung ist. Zudem hat diese Technik Bedeutung in der Keramikindustrie, insbesondere beim Auftragen von Glasuren und Engoben auf keramische Rohscherben. Weiterhin findet diese Technik Anwendung bei Kartonagen oder papier.

Die auf die porösen Körper aufgebrachten Beschichtungsmassen können Aufgaben unterschiedlicher Art erfüllen. So haben beispielsweise Form- und Kernüberzüge in der Gießereitechnik den Zweck, die Form- oder Kernteiloberfläche zu beeinflussen, das Gussstückaussehen zu verbessern, das Gussstück metallurgisch zu beeinflussen und/oder Gussfehler zu vermeiden. In der Keramikindustrie haben Glasuren die Aufgabe, den keramischen Produkten eine vorteilhafte Dichte, Härte, Glätte und Festigkeit sowie Farbe zu verleihen. Ferner spielen bei tonkeramischen Werkstoffen Überzüge aus farbigen Tonschlämmen, sog. Engoben, zur Oberflächenfarbgebung eine Rolle.

In der Regel werden im Gießereiwesen Form- und Kernteile mittels sogenannter Schlichten, welche in flüssiger Form mit geeigneter Viskosität unter Zuhilfenahme einer Trägerflüssigkeit aufgetragen werden, mit einem Feuerfeststoff beschichtet. Der Schlichteüberzug soll den Wärmeaustausch zwischen Schmelze und Gießform verlangsamen, insbesondere wenn der Form- oder Kernwerkstoff eine relativ hohe Wärmeleitfähigkeit besitzt und daher einen gewissen Abschreckeffekt ausübt. Zudem kann der Schlichteüberzug die Oberflächenrauheit der Formen und Kerne mindern und damit zur Erzielung glatter Gussflächen beitragen. Zudem gehört die Verhinderung von Penetration des flüssigen Metalls in die porösen Form- und Kernteiloberflächen zu den Aufgaben des Schlichteüberzugs. Des Weiteren kann die Schlichte das Ankleben des Metalls an der Form- oder Kernwand vermeiden und somit eine sichere Trennung des Gussstücks von der Formwand beim Ausleeren der Form gewährleisten. Außerdem können Schlichten die Aufgabe haben, die Abriebbeständigkeit des Form- oder Kernstoffes zu verbessern und Auswaschungen oder Erosionsangriffe durch die Gießströmung zu vermeiden. Je nach gestellter Aufgabe kann daher zwischen wärmeisolierenden, glättenden und härtenden Schlichten sowie Formtrennmitteln unterschieden werden. Vielfach sind aber diese Aufgabenbereiche auch miteinander kombiniert.

In der Keramikindustrie kommt dem Beschichten von keramischen Rohscherben eine besondere Bedeutung zu. So erhalten beim Glasieren die Rohscherben einen glasartigen Überzug, welcher die keramischen Produkte in dünner Schicht bedeckt und ihnen vorteilhafte Materialeigenschaften verleiht. Neben den eigentlichen Glasbildnern (auch Netzwerkbildner genannt) als Hauptbestandteil enthalten die Beschichtungsmassen, die zum Glasieren eingesetzt werden, in der Regel noch sog. Netzwerkwandler, welche der Glasur verbesserte Schmelzeigenschaften verleihen. Durch die abdichtende Wirkung von Glasuren werden porige bzw. poröse Werkstücke vor dem Eindringen von Gasen und Flüssigkeiten aller Art geschützt. Zudem kann die Glasurauflage die mechanische Festigkeit der Werkstücke wesentlich verbessern und dadurch die Gebrauchstüchtigkeit erhöhen. Aufgrund der glatten Oberflächen der glasierten Werkstücke können diese ferner erhöhten hygienischen Ansprüchen, z.B. auf dem Lebensmittelsektor, genügen. Um eine maximale Beständigkeit der glasierten Artikel gegenüber Säuren, Laugen, Alkohol, Waschmittel, Benzin usw. zu gewährleisten, dürfen keine fehlerhaften Stellen (Risse, Nadelstiche) in der Glasuroberfläche vorhanden sein.

Allgemein wird beim Beschichten von porösen Stoffen das Auftragsverhalten der Beschichtungsmasse nicht nur durch die Rheologie der Beschichtungsmasse, sondern auch durch das Saugverhalten des porösen Körpers sowie durch das Rückhaltevermögen der Trägerflüssigkeit durch den Überzugsstoff beeinflusst. Hinsichtlich des Saugverhaltens poröser Körper ist zu bemerken, dass Sorten mit hydraulischen Bindemitteln wie Ton, Zement und Wasserglas die Trägerflüssigkeit in der Regel besonders stark aufsaugen.

Bei Beschichtungsmassen auf Basis eines wässrigen Bindemittelsystems ist der Einsatz von Stellmitteln, wie beispielsweise natürliche Schleime oder Zellulosederivate, bekannt. Diese bewirken zwar ein hohes Wasserrückhaltevermögen des Überzugstoffes, allerdings wird die Rheologie des Systems dahingehend negativ beeinflusst, dass die Beschichtungsmassen unvorteilhafte, geringere strukturviskose Eigenschaften aufweisen und zähflüssiger ablaufen. Dieses kann zu unerwünschten Anwendungsmerkmalen wie Tropfen- und Gardinenbildung sowie ungleichmäßigen Schichtstärken führen. Dabei ist insbesondere beim Tauchen als Aufbringungsmethode die Optimierung des Ablaufverhaltens der Beschichtungsmasse zur Erzielung von Konturenausbildung, gleichmäßiger Schichtdicke und geringer Tropfenbildung besonders wichtig.

Grundsätzlich muss jede Beschichtungsmasse bei der Verarbeitung im homogenen Zustand gehalten werden. Insbesondere ist ein Absetzen der Feststoffe der Suspension zu vermeiden. In Verbindung mit dem erforderlichen Auftragsverhalten soll der rheologische Charakter sowie der Thixotropierungsgrad der komplexen Suspensionen den erwünschten Anforderungen entsprechen.

Nach dem Stand der Technik war es in der Vergangenheit nicht möglich, alle wichtigen Eigenschaften der Beschichtungsmassen gleichzeitig optimal einzustellen.

So wurden beispielsweise quellfähig aktivierte Schichtsilikate in zahlreichen Gebieten der Technik als Verdickungsmittel für wasserhaltige Systeme eingesetzt. Unter Einsatz von Scherkräften werden dazu die Schichtsilikate in feinverteilter Form im System dispergiert, wobei sich die einzelnen Schichtplättchen weitgehend bis vollständig voneinander lösen und in dem System eine kolloidale Dispersion oder Suspension bilden, die zu einer Gelstruktur führt.

In DE-A-37 040 84 wird vorgeschlagen, die Stabilität einer solchen Gelstruktur sowie die rheologische Wirksamkeit eines Verdickungsmittels zu verbessern, indem zu einem quellfähig aktivierten Schichtsilikat ein langkettiger organischer Polyelektrolyt, wie beispielsweise ein Polysaccharid oder Hetero-Polysaccharid mit einem Gesamt-Molekulargewicht von mindestens 2 Millionen, gegeben wird. Zusätzlich können die Komponenten zur Steigerung der rheologischen Wirksamkeit mit primären oder sekundären Aminen und/oder einem aminofunktionellen Silan zur Umsetzung gebracht werden.

EP-B-0 751 103 offenbart die Verwendung von nicht-kalzinierten Smektit-Tonen und organischen Additiven um die Festigkeit von Tonzusammensetzungen für den Schlickerguss von komplex geformten keramischen Gegenständen zu erhöhen.

US-5,164,433 offenbart ein Verdickungsmittel für wässrige Systeme, welches ein Tonmaterial, Stärke und ein Polymer oder Copolymer einer ungesättigten Carbonsäure, einer modifizierten ungesättigten Carbonsäure und/oder eines Vinylmonomers umfasst.

EP-A-0 509 202 beschreibt ein rheologisches Additiv, welches Ton, ein polymeres Material und Stärke umfasst. Der Ton ist ausgewählt aus Montmorillonit, Bentonit, Hectorit, Kaolin, Illit, Saponit, Attapulgit, Sepiolith und Gemischen davon. Ferner wird eine Beschichtungszusammensetzung auf Wasserbasis beschrieben, umfassend ein Pigment, Latexstreckmittel und ein derartiges rheologisches Additiv.

US-A-5,120,465 beschreibt ein Verdickungsmittel, welches geeignet ist, einem ionischen Detergens thixotrope Eigenschaften zu verleihen, wobei das Verdickungsmittel ein Gemisch aus Kaolinit-Ton und nicht-Kaolinit-Ton, ausgewählt aus Smectit-Ton, Attapulgit-Ton und Gemischen davon, umfasst, wobei der Kaolinit-Ton Kaolinteilchen umfasst, wobei mindestens etwa 50 Gew.-% der Teilchen eine Teilchengröße von weniger als 2 µm äquivalentem sphärischen Durchmesser besitzen, sowie eine detergente Zusammensetzung, umfassend ein derartiges Verdickungsmittel.

US-A-5,735,943 beschreibt ein trockenes, rheologisches Additiv für organische Fluidsysteme, umfassend (a) ein oder mehrerer Organotone, hergestellt durch Umsetzung von Smectit-Ton oder ein oder mehreren organischen Kationen, und (b) ein oder mehrerer faserförmige Materialien.

Allerdings genügen die bekannten Verdickungsmittel nicht immer den speziellen Anforderungen an die Steuerung des Auftragsverhalten von Beschichtungsmassen für poröse Körper, und wichtige Eigenschaften der Beschichtungsmassen werden nicht gleichzeitig optimal eingestellt.

Es war daher die Aufgabe der vorliegenden Erfindung, ein rheologisches Additiv bereitzustellen, welches zur Steuerung des Auftragsverhaltens einer Beschichtungsmasse für poröse Körper geeignet ist und es ermöglicht, die rheologischen Eigenschaften von Beschichtungsmassen für poröse Körper auf Basis eines wässrigen Bindemittelsystems vorteilhaft einzustellen.

Diese Aufgaben werden erfindungsgemäß durch ein rheologisches Additiv gelöst, welches einen illithaltigen Ton, ein Smektit und Attapulgit in einem Verhältnis von illithaltiger Ton : Smektit : Attapulgit von 1 bis 100 : 1 bis 100 : 1 bis 100 umfasst.

Weiterhin betrifft die Erfindung Beschichtungsmassen, die ein erfindungsgemäßes rheologisches Additiv umfassen.

Die Erfindung betrifft ebenfalls ein Verfahren zur Herstellung einer erfindungsgemäßen Beschichtungsmasse, welches dadurch gekennzeichnet ist, dass ein erfindungsgemäßes rheologisches Additiv in eine Trägerflüssigkeit eingebracht wird.

Weiterhin betrifft die Erfindung Verfahren zum Beschichten poröser Körper mit einer Beschichtungsmasse, umfassend die Schritte:
a) Bereitstellen einer erfindungsgemäßen Beschichtungsmasse;
b) Aufbringen der Beschichtungsmasse auf einen porösen Körper; und
c) Trocknen des beschichteten porösen Körpers.

Des Weiteren betrifft die Erfindung beschichtete poröse Körper, auf denen eine erfindungsgemäße Beschichtungsmasse aufgebracht worden ist.

Die Erfindung betrifft ebenfalls eine Verwendung einer erfindungsgemäßen Beschichtungsmasse zum Beschichten eines porösen Körpers.

Schließlich betrifft die Erfindung eine Verwendung eines erfindungsgemäßen rheologischen Additivs zur Steuerung des Auftragsverhaltens einer Beschichtungsmasse für poröse Körper.

Die Erfindung beruht auf der überraschenden Erkenntnis, dass durch Kombination eines illithaltigen Tones mit einem Smektit und Attapulgit in einem Verhältnis von illithaltiger Ton : Smektit : Attapulgit von 1 bis 100 : 1 bis 100 : 1 bis 100 ein rheologisches Additiv bereitgestellt werden kann, welches, eingebracht in eine Beschichtungsmasse, nicht zu einer extremen Verdickung unter Verlust der Strukturviskosität führt. Solche negativen Effekte sind z.B. für Systeme, die nur Smektit enthalten, auf dem Fachgebiet bekannt.

Erfindungsgemäß handelt sich bei dem illithaltigen Ton um ein Tonmaterial, welches ein geringes Quellverhalten aufweist. Ein solches Quellverhalten zeigt sich in der Regel bei Tonmaterialien, die einen Kaolinitgehalt von 80 Gew.-% oder weniger aufweisen. Alle illithaltigen Tone, die einen Illitgehalt von mindestens 5 Gew.-% aufweisen, können im Rahmen der Erfindung eingesetzt werden. Der bevorzugte Illitgehalt des erfindungsgemäßen illithaltigen Tons liegt zwischen 5 und 50 Gew.-%, stärker bevorzugt zwischen 5 und 20 Gew.-% und besonders bevorzugt zwischen 5 und 10 Gew.-%. Ein solcher illithaltiger Ton ist beispielsweise von der Firma Klärlicher Ton- und Schamottewerke, Mannheim & Co. KG, unter der Handelsbezeichnung "Klärlicher Blauton" erhältlich.

Die Auswahl an geeigneten Smektiten als weitere Komponente eines erfindungsgemäßen Additivs ist nicht begrenzt. Beispiele für geeignete Smektite sind Hectorit, Saponit, Sauconit, Montmorillonit, Beidellit und Nontronit sowie Smektithaltige Tonmaterialien wie Bentonit. Als besonders wirksam zur Lösung der dieser Erfindung zugrunde liegenden Aufgabe hat sich Bentonit erwiesen. Als Beispiel wird auf ein Smektit der Handelsbezeichnung "Bentone EW" Bezug genommen, das erfindungsgemäß eingesetzt werden kann. Es ist von der Firma Elementis Specialities Inc., Hightstown, NJ, USA, erhältlich.

Weiterhin umfasst ein erfindungsgemäßes rheologisches Additiv Attapulgit. Beispielsweise kann als Attapulgit ein Produkt der Firma Solvadis AG, Frankfurt am Main, mit der Handelsbezeichnung "Attagel 40" eingesetzt werden.

Ein erfindungsgemäßes rheologisches Additiv umfasst die Bestandteile illithaltiger Ton : Smektit : Attapulgit in dieser Reihenfolge im Verhältnis von 1 bis 100 : 1 bis 100 : 1 bis 100, bevorzugt 1 bis 30 : 1 bis 20 : 1 bis 20. Besonders bevorzugt ist ein Verhältnis von 1 bis 4 : 1 bis 2 : 1 bis 2.

In einer weiteren bevorzugten Ausführungsform besteht ein erfindungsgemäßes rheologisches Additiv lediglich aus den Bestandteilen illithaltiger Ton, Smektit und Attapulgit. Besonders bevorzugt ist ein erfindungsgemäßes rheologisches Additiv, lediglich bestehend aus den Bestandteilen illithaltiger Ton, Smektit und Attapulgit, in dem die Bestandteile in den oben genannten Verhältnissen zueinander vorliegen.

Die erfindungsgemäßen rheologischen Additive können zur Steuerung des Auftragsverhaltens von Beschichtungsmassen für poröse Körper verwendet werden.

Die erfindungsgemäßen Beschichtungsmassen umfassen bevorzugt 0,1 bis 10 Gew-% des illithaltigen Tons, 0,1 bis 10 Gew-% des Smektits und 0,1 bis 10 Gew-% Attapulgit. In einer besonders bevorzugten Ausführungsform umfasst eine erfindungsgemäße Beschichtungsmasse 0,1 bis 3,0 Gew-% des illithaltigen Tons, 0,1 bis 2,0 Gew-% des Smektits und 0,1 bis 2,0 Gew-% Attapulgit.

Konventionellerweise umfasst eine Beschichtungsmasse eine Trägerflüssigkeit. Die festen Bestandteile der Beschichtungsmasse können mit der Trägerflüssigkeit eine Suspension bilden, wodurch die Feststoffbestandteile verarbeitbar werden und durch ein geeignetes Verfahren, wie z.B. Tauchen, auf den zu beschichtenden Körper aufgetragen werden können. In einer bevorzugten Ausführungsform umfasst eine erfindungsgemäße Beschichtungsmasse eine Trägerflüssigkeit, wobei die Trägerflüssigkeit als Hauptbestandteil Wasser umfasst. Neben Wasser als Hauptbestandteil kann die Trägerflüssigkeit erfindungsgemäß weiterhin Alkohole, wie beispielsweise Methanol, Ethanol, n-Propanol, iso-Propanol, n-Butanol, in einer Menge von bis zu 10 Gew.-%, vorzugsweise 5 Gew.-%, insbesondere 2 Gew.-% enthalten. In einer besonders bevorzugten Ausführungsform ist Wasser die alleinige Trägerflüssigkeit einer erfindungsgemäßen Beschichtungsmasse.

Als zweckbestimmenden Anteil enthalten Beschichtungsmassen konventionell mindestens einen Grundstoff. Der Zweck dieses Grundstoffs liegt hauptsächlich in der Beeinflussung der Oberfläche des zu beschichtenden Körpers. Beispielsweise kann in der Gießereitechnik der Grundstoff die Sandporen eines Kern- oder Formteils verschließen, um das Eindringen des Gießmetalls zu verhindern. In der Keramikindustrie ermöglichen Glas- öder Netzwerkbildner die Bildung von Überzügen in Form von aufgeschmolzenen Gläsern (Glasuren) auf dem keramischen Werkstoff, welche dem Werkstoff u.a. verbesserte mechanische Eigenschaften verleihen. Ferner können farbige Tonschlämme (Engoben) als farbgebende Überzüge auf tonkeramischen Werkstoffen zum Einsatz kommen. Kartonagen und Papier können mit tonhaltigen Suspensionen beschichtet werden, um glatte Oberflächen zu erzielen und die Festigkeit zu steigern.

In einer bevorzugten Ausführungsform umfasst eine erfindungsgemäße Beschichtungsmasse einen Feuerfeststoff als Grundstoff. Als Feuerfeststoff kommen alle konventionell einsetzbaren Feuerfeststoffe in Betracht. Beispielsweise können Pyrophyllit, Glimmer, Zirkonsilikat, Andalusit, Schamotte, Eisenoxid, Kyanit, Bauxit, Olivin, Aluminiumoxid, Quarz, Talk, kalzinierte Kaoline und/oder Graphit alleine oder als Mischungen in unbegrenzten Mischungsverhältnissen verwendet werden. Besonders bevorzugte Feuerfeststoffe sind Pyrophyllit, Glimmer, Zirkonsilikat, Eisenoxid und Graphit.

Für den Einsatz in der Gießereitechnik umfassen die erfindungsgemäßen Beschichtungsmassen vorzugsweise weiterhin ein Bindemittel. Die Aufgabe eines Bindemittels liegt vor allem darin, nach dem Trocknen der auf einen porösen Körper aufgebrachten Beschichtungsmasse ein Abbinden der Inhaltsstoffe der Beschichtungsmasse, insbesondere des Grundstoffes, zu gewährleisten. Vorzugsweise härtet das Bindemittel irreversibel aus und ergibt somit eine abriebfeste Beschichtung auf dem porösen Körper. Die Abriebfestigkeit ist für die Beschichtungsmasse von großer Bedeutung, da die Beschichtung bei mangelnder Abriebfestigkeit beschädigt werden kann. Insbesondere sollte das Bindemittel durch Luftfeuchtigkeit nicht rückerweichen. Erfindungsgemäß können alle Bindemittel verwendet werden, die konventionell in wässrigen Systemen Anwendung finden. Beispielsweise können Stärke, Dextrin, Peptide, Polyvinylalkohol, Polyacrylsäure, Polystyrol- und/oder Polyvinylacetat-Polyacrylatdispersionen eingesetzt werden. In einer besonders bevorzugten Ausführungsform der Erfindung umfasst das Bindemittel Stärke.

In einer weiteren bevorzugten Ausführungsform umfasst eine erfindungsgemäße Beschichtungsmasse Glas- bzw. Netzwerkbildner sowie Netzwerkwandler als Grundstoffe. Für die Glasbildner und Netzwerkwandler kommen alle konventionell zur Herstellung von Glasuren auf keramischen Werkstoffen einsetzbaren Stoffe in Betracht. Beispielsweise können erfindungsgemäß Mischungen von SiO₂ und Al₂O₃ als Glasbildner und Metalloxide als Netzwerkwandler eingesetzt werden. Besonders bevorzugt sind hierfür basische Metalloxide, wie beispielsweise Na₂O, K₂O, CaO, BaO, Li₂O, MgO, ZnO, PbO, SrO.

In einer weiteren bevorzugten Ausführungsform, die zur Herstellung von Engoben auf tonkeramischen Werkstoffen verwendet werden kann, umfasst eine erfindungsgemäße Beschichtungsmasse ein farbiges Tonmaterial als Grundstoff. Als farbiges Tonmaterial können alle in der Technik bekannten und üblichen Materialien eingesetzt werden.

Neben den bereits erwähnten Bestandteilen können die Beschichtungsmassen weitere konventionelle Zusätze, wie beispielsweise Suspensionsmittel, Netz- und Dispergiermittel, Stellmittel und/oder Biozide umfassen. Als Suspensionsmittel können beispielsweise Zelluloseether, Alginate, Pflanzenschleime und/oder Pektine, vorzugsweise, Pflanzenschleime verwendet werden. Beispiele für geeignete Netz- und Dispergiermittel sind ionische und nichtionische, vorzugsweise nichtionische Tenside. Als Stellmittel können beispielsweise Kombinationen aus anionischen Polymerverbindungen, insbesondere Polyphosphate oder Polyacrylsäuresalze, und Salzen, insbesondere Salze der Metalle der 1. und 2. Hauptgruppe, verwendet werden. Erfindungsgemäß können Formaldehyd, 2-Methyl-4-isothiazolin-3-on (MIT), 5-Chlor-2-methyl-4-isothiazolin-3-on (CIT) und/oder 1,2-Benzisothiazolin-3-on (BIT), vorzugsweise MIT und/oder BIT, als Biozide eingesetzt werden.

Erfindungsgemäße Beschichtungsmassen können durch Einbringen der beschriebenen rheologischen Additive in ein wässriges Bindemittelsystem hergestellt werden. Durch den Zusatz des rheologischen Additivs ist es möglich, das Auftragsverhalten der Beschichtungsmasse zu steuern. Zur Herstellung der Beschichtungsmasse wird zunächst das rheologische Additiv in der Trägerflüssigkeit aufgeschlossen. Dazu wird das rheologische Additiv in fester oder pastöser Form zu der Trägerflüssigkeit gegeben und unter Verwendung ausreichend hoher Scherkräfte unter Rühren aufgeschlossen. Je nach verwendeter Zusammensetzung des rheologischen Additivs kann die Aufschlusszeit für eine optimale Dispergierung der später zugesetzten Feststoffe kritisch sein. Deshalb sind zu kurze Aufschlusszeiten zu vermeiden, wenn eine optimale Steuerung der rheologischen Eigenschaften der Beschichtungsmassen gewährleistet werden soll. Nach Aufschluss des rheologischen Additivs in der Trägerflüssigkeit können die weiteren Bestandteile der Beschichtungsmasse, insbesondere die Grundstoffe, in beliebiger zugegeben werden.

Für den kommerziellen Vertrieb kann eine erfindungsgemäße Beschichtungsmasse, gemäß dem oben genannten Verfahren, als fertig formulierte Beschichtungsmasse bzw. Schlichte ausgeliefert werden. Weiterhin kann eine erfindungsgemäße Beschichtungsmasse in pastöser Form vertrieben werden. Zur Bereitstellung einer gebrauchsfertigen Beschichtungsmasse muss in diesem Fall die geeignete Menge an Trägerflüssigkeit zugegeben werden, die nötig ist, um die erforderlichen Viskositäts- und Dichteeigenschaften der Schlichte einzustellen. Ferner kann die Beschichtungsmasse als pulverförmiges Feststoffgemisch vertrieben werden, zu welchem zur Herstellung einer gebrauchsfertigen Schlichte die erforderliche Menge an Trägerflüssigkeit zugegeben werden muss. Eine erfindungsgemäße Beschichtungsmasse umfasst im gebrauchsfertigen Zustand neben der Trägerflüssigkeit vorzugsweise einen Feststoffgehalt zwischen 20 und 50 Gew.-%, besonders bevorzugt zwischen 30 und 40 Gew.-%.

Je nach Aufgabe, die an die Beschichtungsmasse gestellt wird, können die Partikelgrößen der verwendeten Feststoffe von Bedeutung sein. Werden die erfindungsgemäßen Beschichtungsmassen beispielsweise zur Beschichtung von Kernen oder Formen für den Gießereieinsatz verwendet, ermöglichen hinreichend geringe Partikelgrößen eine vorteilhafte Oberflächenglätte des Gussstücks. Die Partikelgrößen der erfindungsgemäß für diesen Zweck eingesetzten Feuerfeststoffe liegen vorzugsweise zwischen 1 und 500 µm, besonders bevorzugt zwischen 10 und 150 µm. Bei Verwendung der erfindungsgemäßen Beschichtungsmassen zum Glasieren von keramischen Rohscherben liegt die Partikelgröße des eingesetzten Glasurversatzes vorzugsweise bei max. 100 µm.

Je nach gewünschter Schichtdicke des aufzutragenden Überzugstoffes können weitere charakteristische Parameter der Beschichtungsmasse eingestellt werden. So weisen erfindungsgemäße Beschichtungsmassen, die zur Beschichtung von Formen und Kernen in der Gießereitechnik angewendet werden, in einer bevorzugten Ausführungsform eine Viskosität von 12 bis 17s, besonders bevorzugt 14 bis 16s auf (bestimmt nach DIN Auslaufbecher 4mm, Ford-Cup) und haben vorzugsweise eine Dichte von 20 bis 50°Bé, besonders bevorzugt 25 bis 35°Bé (bestimmt nach der Baumé-Auftriebsmethode).

Die erfindungsgemäßen Beschichtungsmassen können zum Beschichten poröser Körper verwendet werden. Die Beschichtungsmassen zeigen überraschender Weise ein vorteilhaftes Auftragsverhalten beim Aufbringen der Beschichtungsmassen auf poröse Körper. Erfindungsgemäß ist es beispielsweise möglich, die Wasserretention des Überzugsstoffs zu erhöhen und gleichzeitig ein schnelles Ablaufverhalten zu gewährleisten. Dadurch kann Tropfen- und Gardinenbildung sowie eine ungleichmäßige Schichtdicke vermieden werden.

Die Beschichtungsmassen eignen sich für alle denkbaren Anwendungen, bei denen eine Beschichtung poröser Körper mit Überzugsstoffen auf Basis einer wässrigen Trägerflüssigkeit erwünscht ist. Die erfindungsgemäßen Beschichtungsmassen eignen sich besonders gut zum Beschichten von Kernen und Formen für den Gießereieinsatz. Andere Beispiele für bevorzugte poröse Körper, die mit den Beschichtungsmassen beschichtet werden können, umfassen keramische Rohscherben sowie Kartonagen oder Papier. Besonders bevorzugte poröse Körper sind Kerne und Formen für den Gießereieinsatz. Als Beispiele für Kerne und Formen für den Gießereieinsatz können Sandkerne genannt werden, die PUR ColdBox-, Wasserglas CO₂-, MF Resol-, Resol CO₂-, Furanharz-, Phenolharz- oder Wasserglas/Ester-gebunden sind. Beispiele für keramische Rohscherben sind Hochspannungsisolatoren und Sanitärartikel.

Ein Verfahren zum Beschichten poröser Körper mit einer erfindungsgemäßen Beschichtungsmasse umfasst die Schritte:
a) Bereitstellen der Beschichtungsmasse;
b) Aufbringen der Beschichtungsmasse auf einen porösen Körper; und
c) Trocknen des beschichteten porösen Körpers.

Das Aufbringen einer bereitgestellten erfindungsgemäßen Beschichtungsmasse kann mittels aller in der Technik konventionellen Aufbringungsmethoden erfolgen. Beispiele für mögliche Aufbringungsmethoden sind Tauchen, Fluten, Sprühen und Streichen. Besonders bevorzugt ist das Aufbringen durch Tauchen.

Die Zeit, die das Ablaufen der überschüssigen Beschichtungsmasse in Anspruch nimmt, richtet sich nach dem Ablaufverhalten der verwendeten Beschichtungsmasse. Nach einer ausreichenden Ablaufzeit wird der beschichtete poröse Körper einer Trocknung unterzogen. Als Trocknungsmethoden können alle in der Technik konventionellen Trocknungsmethoden wie beispielsweise Trocknen mit Mikrowellen oder im Konvektionsofen angewendet werden. In einer bevorzugten Ausführungsform der Erfindung wird der beschichtete poröse Körper bei 100 bis 250°C, besonders bevorzugt bei 120 bis 180°C, in einem Konvektionsofen getrocknet.

Nach dem erfindungsgemäßen Verfahren können poröse Körper mit einem einzigen Beschichtungsverfahrensschritt mit der Beschichtungsmasse beschichtet werden. Je nach gewünschter Trockenschichtdicke sind aber auch Mehrfachbeschichtungen möglich. In einer bevorzugten Ausführungsform besitzt ein poröser Körper, welcher in einem einzigen Beschichtungsschritt beschichtet worden ist, eine Trockenschichtdicke zwischen 50 und 600 µm, wobei eine Trockenschichtdicke zwischen 150 und 300 µm besonders bevorzugt ist.

Die Erfindung wird durch die folgenden Beispiele weiter erläutert.

### Beispiele

### 1. Vergleichsbeispiel

Anhand der folgenden Vergleichsbeispiele werden die rheologischen Eigenschaften, insbesondere die Thixotropie, sowie das Wasserrückhaltevermögen des erfindungsgemäßen Additivs im Vergleich mit den Einzelkomponenten untersucht.

Dazu wurden zunächst separate Mischungen von illithaltigem Ton, Smektit und Attapulgit in Wasser hergestellt. Hierzu wurden die Feststoffe mit einer geeigneten Menge Wasser je 5 Minuten mit einer Zahnscheibe durchmischt. Nach dieser Arbeitsvorschrift wurden die in Tabelle 1 aufgeführten Mischungen I bis III erhalten. Handelsnamen sind durch (H) gekennzeichnet.

**Tabelle 1**

| Nr. | | |
|---|---|---|
| 1 | Mischung I | 30 Gew.-% Klärlicher Blauton (H)^{a)} in Wasser |
| 2 | Mischung II | 10 Gew.-% Bentone EW (H)^{b)} in Wasser |
| 3 | Mischung III | 10 Gew.-% Attagel 40 (H)^{c)} in Wasser |

| | | |
|---|---|---|
| ^{a)} Klärlicher Blauton; Tonmaterial, enthaltend 7 Gew.-% Illit (Klärlicher Ton- und Schamottewerke) ^{b)} Bentone EW, Bentonit (Elementis) ^{c)} Attagel 40, Attapulgit (Solvadis) | | |

Des Weiteren werden die in Tabelle 2 aufgeführten Kombinationen der Mischungen untereinander in den Mischungsverhältnissen 1:1 bzw. 1:1:1 hergestellt. Das Mischungsverhältnis von Mischung Nr. 7 entspricht in etwa dem Verhältnis der Komponenten des rheologischen Additivs der im unten aufgeführten Ausführungsbeispiel beschriebenen Beschichtungsmasse.

**Tabelle 2**

| Nr. | |
|---|---|
| 4 | 1 Teil I + 1 Teil III |
| 5 | 1 Teil I + 1 Teil II |
| 6 | 1 Teil II + 1 Teil III |
| 7 | 1 Teil I + 1 Teil II + 1 Teil III |

Mit Hilfe eines Haake RheoStress-Messgeräts wurden die rheologischen Eigenschaften der Mischungen untersucht. Hierzu wurden die Fließkurven der jeweiligen Mischungen aufgenommen und daraus die in Tabelle 3 aufgeführten Parameter bestimmt.

Die Thixotropie wird dabei als die Fläche zwischen den beiden Schubspannungskurven (steigende und abnehmende Schergeschwindigkeit) bestimmt. Eine gegebenenfalls vorhandene Aktivierung kann aus dem Fließkurvendiagramm direkt bestimmt werden. Die Fließgrenze kann als Achsenabschnitt der linearen Regressionsgeraden bestimmt werden. Mit η∞ werden die Viskositätswerte bezeichnet, die sich bei hoher Schergeschwindigkeit (50s⁻¹) ergeben.

Des Weiteren werden die Mischungen auf ihr Wasserrückhaltevermögen untersucht. Unter Wasserrückhaltevermögen versteht man die Retentionszeit einer austretenden Flüssigkeit aus einem porösen Material. Hierzu wird, ähnlich dem Prinzip der Flüssigkeitschromatographie, die Zeit gemessen, welche die austretende Flüssigkeit zum Erreichen eines Detektors oder einer Detektionsmarkierung benötigt.

Zur Bestimmung der Wasserretentionszeit wurde die zu bestimmende Suspension in einen Glasbehälter gefüllt und anschließend ein Filterpapierstreifen (Blauband) senkrecht in die Suspension eingetaucht. Die Flüssigkeit saugt sich aus der Suspension in das Filterpapier und steigt in diesem nach oben. Nachdem die Flüssigkeitsfront eine bestimmte Marke (von z.B. 50 mm vom Startpunkt) wird die Zeit gestoppt. Diese Zeit stellt die Retentionszeit dar. Je länger diese ist, desto stärker ist die Suspension in der Lage, die Flüssigkeit in sich zu binden.

Zur Beurteilung des Wasserrückhaltevermögens wurde im vorliegenden Falle ein abstraktes Bewertungssystem eingeführt. Hierbei bedeutet: ++ ein sehr gutes, + ein gutes, ± ein ausreichendes und - ein schlechtes Wasserrückhaltevermögen.

Die Ergebnisse sind in Tabelle 3 aufgeführt.

**Tabelle 3**

| Nr. | Fließverhalten | Thixotropie [Pas⁻¹] | Aktivierung [Pa] | Fließgrenze [Pa] | η∞ [Pas] | Wasserrückhaltevermögen |
|---|---|---|---|---|---|---|
| 1 | annähernd newtonisch | 1 | 0 | 1 | 0,1 | ± |
| 2 | stark thixotrop | 2183 | 0 | 82 | 2,7 | ++ |
| 3 | rheopex | -13 | 0 | 6 | 0,2 | - |
| 4 | rheopex | -11 | 0 | 4 | 0,15 | n.b.^{a)} |
| 5 | stark thixotrop | 424 | 10 | 44 | 1,1 | n.b.^{a)} |
| 6 | thixotrop | 181 | 10 | 30 | 0,8 | n.b.^{a)} |
| 7 | thixotrop | 160 | 5 | 37 | 0,8 | + |

| | | | | | | |
|---|---|---|---|---|---|---|
| ^{a)} n.b. = nicht bestimmt | | | | | | |

Aus Tabelle 3 wird deutlich, dass die Thixotropie des Smektits durch Zusatz von illithaltigem Ton (Nr. 5), aber insbesondere durch den Zusatz von Attapulgit (Nr. 6) erniedrigt wird, und zwar stärker als es dem Verdünnungseffekt entspricht. Überraschender Weise zeigen die hohen Mengen an illithaltigem Ton, die im Vergleich zu den anderen Schichtsilikaten in Mischung Nr. 7 in der 3fachen Menge vorliegen, so gut wie keinen Beitrag zu der Viskosität bei hohen Schergefällen (η∞), was ein schnelles Ablaufverhalten der entsprechenden Beschichtungsmassen impliziert. Gleichzeitig kann den Daten für Mischung Nr. 7 entnommen werden, dass aufgrund der hohen Fließgrenze und der vorhandenen Thixotropie, zu der vor allem das Smektit beiträgt, ein schnelles Verharren und ein guter Verlauf des letzten Tropfens erwartet werden kann. Das Wasserrückhaltevermögen wird proportional durch den Anteil des Smektits gesteuert.

### 2. Ausführungsbeispiel

Es wird eine Beschichtungsmasse mit der in Tabelle 4 genannten Zusammensetzung hergestellt. Handelsnamen sind durch (H) gekennzeichnet.

**Tabelle 4**

| Bestandteil | Gew.-% |
|---|---|
| Wasser | 60,8 |
| Feuerfeststoffe | 33,9 |
| Klärlicher Blauton (H)^{a)} | 2,30 |
| Bentone EW (H)^{b}) | 0,71 |
| Attagel 40 (H)^{c)} | 0,75 |
| Stärke | 0,80 |
| Netz- und Dispergiermittel | 0,54 |
| Biozide | 0,20 |

| | |
|---|---|
| ^{a)} Klärlicher Blauton; Tonmaterial, enthaltend 7 Gew.-% Illit (Klärlicher Ton- und Schamottewerke) ^{b)} Bentone EW, Bentonit (Elementis) ^{c)} Attagel 40, Attapulgit (Solvadis) | |

Zur Herstellung der Beschichtungsmasse legt man ca. 30 Gew.-% Wasser vor und gibt die Positionen Biozide, Stärke, Attagel 40, Klärlicher Blauton und Bentone EW dazu. Unter Benutzung eines Dissolverrührers wird die Mischung bei höchstmöglicher Drehzahl 20 Minuten lang aufgeschlossen. Anschließend gibt man den Restanteil Wasser sowie das Dispergiermittel und gegebenenfalls ein Stellmittel dazu und durchmischt für weitere 5 Minuten. Danach werden die Feuerfeststoffe eingerührt. Die Mischung wird 20 Minuten bei höchster Drehzahl des Dissolverrühreres nachgerührt.

Schließlich gibt man das Netzmittel dazu und lässt 10 Minuten bei verminderter Drehzahl nachrühren.

Die Beschichtungsmasse gemäß Tabelle 4 wurde verwendet um Sandkerne, die nach dem PUR ColdBox-Verfahren gebunden wurden, zu beschichten. Gegenüber einer Beschichtungsmasse, die nicht ein erfindungsgemäßes rheologisches Additiv beinhaltet, kann die Wasserretention verdoppelt werden. Zudem zeigte sich ein vergleichbar schnelles Ablaufverhalten. Die Bildung von Tropfen oder Gardinen konnte vermieden werden. Die beschichteten Kerne wiesen eine gleichmäßige Schichtdicke auf.

## Patentansprüche

1. Rheologisches Additiv, umfassend einen illithaltigen Ton, ein Smektit und Attapulgit in einem Verhältnis von illithaltiger Ton : Smektit : Attapulgit von 1 bis 100 : 1 bis 100 : 1 bis 100.

2. Rheologisches Additiv nach Anspruch 1, wobei der illithaltige Ton einen Illitgehalt zwischen 5 und 20 Gew.-% aufweist.

3. Rheologisches Additiv nach einem der Ansprüche 1 oder 2, wobei das Smektit Bentonit ist.

4. Beschichtungsmasse, umfassend ein rheologisches Additiv nach einem der Ansprüche 1 bis 3.

5. Beschichtungsmasse nach Anspruch 4, die 0,1 bis 10 Gew.-% des illithaltigen Tons, 0,1 bis 10 Gew.-% des Smektits und 0,1 bis 10 Gew.-% Attapulgit umfasst.

6. Beschichtungsmasse nach Anspruch 5, die 0,1 bis 3,0 Gew.-% des illithaltigen Tons, 0,1 bis 2,0 Gew.-% des Smektits und 0,1 bis 2,0 Gew.-% Attapulgit umfasst.

7. Beschichtungsmasse nach einem der Ansprüche 4 bis 6, die weiterhin eine Trägerflüssigkeit umfasst, wobei die Trägerflüssigkeit als Hauptbestandteil Wasser umfasst.

8. Beschichtungsmasse nach Anspruch 7, in der die Trägerflüssigkeit Wasser ist.

9. Beschichtungsmasse nach einem der Ansprüche 4 bis 8, die weiterhin einen Feuerfeststoff umfasst.

10. Beschichtungsmasse nach Anspruch 9, wobei der Feuerfeststoff Pyrophyllit, Glimmer und/oder Zirkonsilikat umfasst.

11. Beschichtungsmasse nach einem der Ansprüche 4 bis 10, die weiterhin ein Bindemittel umfasst.

12. Beschichtungsmasse nach Anspruch 11, in der das Bindemittel Stärke umfasst.

13. Beschichtungsmasse nach einem der Ansprüche 4 bis 8, die weiterhin einen Glasbildner und einen Netzwerkwandler umfasst.

14. Beschichtungsmasse nach Anspruch 13, wobei der Glasbildner SiO₂ und Al₂O₃ umfasst und der Netzwerkwandler ausgewählt ist aus Na₂O, K₂O, CaO, BaO, Li₂O, MgO, ZnO, PbO und SrO.

15. Beschichtungsmasse nach einem der Ansprüche 4 bis 8, die weiterhin ein farbiges Tonmaterial umfasst.

16. Beschichtungsmasse nach einem der Ansprüche 4 bis 15, welches weiterhin ein Additiv ausgewählt aus Suspensionsmittel, Netz- und Dispergiermittel, Stellmittel und/oder Biozid umfasst.

17. Verfahren zur Herstellung einer Beschichtungsmasse nach einem der Ansprüche 4 bis 16, **dadurch gekennzeichnet, dass** ein rheologisches Additiv gemäß einem der Ansprüche 1 bis 3 in eine Trägerflüssigkeit eingebracht wird.

18. Verfahren zum Beschichten poröser Körper mit einer Beschichtungsmasse, umfassend die Schritte:
a) Bereitstellen einer Beschichtungsmasse nach einem der Ansprüche 4 bis 16;
b) Aufbringen der Beschichtungsmasse auf einen porösen Körper; und
c) Trocknen des beschichteten porösen Körpers.

19. Verfahren nach Anspruch 18, wobei der poröse Körper ein Kern oder eine Form für den Gießereieinsatz ist.

20. Verfahren nach Anspruch 18, wobei der poröse Körper eine keramische Rohscherbe ist.

21. Verfahren nach Anspruch 18, wobei der poröse Körper eine Kartonage oder Papier ist.

22. Verfahren nach einem der Ansprüche 18 bis 21, wobei die Auftragung der Zusammensetzung auf den porösen Körper durch Tauchen erfolgt.

23. Beschichteter poröser Körper, auf den eine Beschichtungsmasse gemäß einem der Ansprüche 4 bis 16 aufgebracht worden ist.

24. Beschichteter poröser Körper nach Anspruch 23, auf den die Beschichtungsmasse durch Tauchen aufgebracht worden ist.

25. Verwendung einer Beschichtungsmasse nach einem der Ansprüche 4 bis 16 zum Beschichten eines porösen Körpers.

26. Verwendung nach Anspruch 25, wobei der poröse Körper ein Kern oder eine Form für den Gießereieinsatz ist.

27. Verwendung nach Anspruch 25, wobei der poröse Körper eine keramische Rohscherbe ist.

28. Verwendung nach Anspruch 25, wobei der poröse Körper eine Kartonage oder Papier ist.

29. Verwendung eines rheologischen Additivs nach einem der Ansprüche 1 bis 3 zur Steuerung des Auftragsverhaltens einer Beschichtungsmasse für poröse Körper.

## Claims

1. A rheological additive comprising illite containing clay, smectite and attapulgite in a ratio of illite containing clay : smectite : attapulgite of 1 to 100 : 1 to 100 : 1 to 100.

2. The rheological additive according to claim 1, wherein the illite containing clay has an illite content between 5 and 20 wt.-%.

3. The rheological additive according to any of claims 1 or 2, wherein the smectite is bentonite.

4. A coating composition comprising a rheological additive according to any of claims 1 to 3.

5. The coating composition according to claim 4 comprising 0.1 to 10 wt.-% of the illite containing clay, 0.1 to 10 wt.-% of the smectite and 0.1 to 10 wt.-% attapulgite.

6. The coating composition according to claim 5 comprising 0.1 to 3.0 wt.-% of the illite containing clay, 0.1 to 2.0 wt.-% of the smectite and 0.1 to 2.0 wt.-% attapulgite.

7. The coating composition according to any of claims 4 to 6, furthermore comprising a carrier liquid, wherein the carrier liquid comprises water as the main component.

8. The coating composition according to claim 7, wherein the carrier liquid is water.

9. The coating composition according to any of claims 4 to 8, furthermore comprising a refractory material.

10. The coating composition according to claim 9, wherein the refractory material comprises pyrophyllite, mica and/or zirconium silicate.

11. The coating composition according to any of claims 4 to 10, furthermore comprising a binder.

12. The coating composition according to claim 11, wherein the binder comprises starch.

13. The coating composition according to any of claims 4 to 8, furthermore comprising a glass former and a network modifier.

14. The coating composition according to claim 13, wherein the glass former comprises SiO₂ and Al₂O₃, and the network modifier is selected from Na₂O, K₂O, CaO, BaO, Li₂O, MgO, ZnO, PbO and SrO.

15. The coating composition according to any of claims 4 to 8, furthermore comprising a chromatic clay material.

16. The coating composition according to any of claims 4 to 15, furthermore comprising an additive selected from suspending agent, wetting and dispersing agent, standardizing agent and/or biocide.

17. A process for the production of a coating composition according to any of claims 4 to 16, **characterized in that** a rheological additive according to any of claims 1 to 3 is introduced into a carrier liquid.

18. A process for coating porous bodies with a coating composition comprising the steps:
a) providing a coating composition according to any of claims 4 to 16;
b) applying the coating composition to a porous body; and
c) drying the coated porous body.

19. The process according to claim 18, wherein the porous body is a core or a mold for use in foundry technology.

20. The process according to claim 18, wherein the porous body is a raw ceramic body.

21. The process according to claim 18, wherein the porous body is cardboard or paper.

22. The process according to any of claims 18 to 21, wherein the composition is applied to the porous body by means of a dip coating process.

23. A coated porous body onto which a coating composition according to any of claims 4 to 16 has been applied.

24. The coated porous body according to claim 23, onto which the coating composition has been applied by means of a dip coating process.

25. Use of a coating composition according to any of claims 4 to 16 for coating a porous body.

26. Use according to claim 25, wherein the porous body is a core or a mold for use in foundry technology.

27. Use according to claim 25, wherein the porous body is a raw ceramic body.

28. Use according to claim 25, wherein the porous body is cardboard or paper.

29. Use of a rheological additive according to any of claims 1 to 3 for controlling the application characteristics of a coating composition for porous bodies.

## Revendications

1. Additif rhéologique comprenant une argile contenant de l'illite, une smectite et de l'attapulgite dans un rapport de argile contenant de l'illite:smectite:attapulgite de 1 à 100:1 à 100:1 à 100.

2. Additif rhéologique selon la revendication 1 où l'argile contenant de l'illite présente une teneur en illite entre 5 et 20 % en masse.

3. Additif rhéologique selon l'une des revendications 1 ou 2 où la smectite est de la bentonite.

4. Masse de revêtement comprenant un additif rhéologique selon l'une des revendications 1 à 3.

5. Masse de revêtement selon la revendication 4 qui comprend 0,1 à 10 % en masse d'argile contenant de l'illite, 0,1 à 10 % en masse de smectite et 0,1 à 10 % en masse d'attapulgite.

6. Masse de revêtement selon la revendication 5 qui comprend 0,1 à 3,0 % en masse d'argile contenant de l'illite, 0,1 à 2,0 % en masse de smectite et 0,1 à 2,0 % en masse d'attapulgite.

7. Masse de revêtement selon l'une des revendications 4 à 6 qui comprend en outre un liquide support où le liquide support comprend de l'eau comme constituant principal.

8. Masse de revêtement selon la revendication 7 où le liquide support est l'eau.

9. Masse de revêtement selon l'une des revendications 4 à 8 qui comprend en outre une substance réfractaire.

10. Masse de revêtement selon la revendication 9 où la substance réfractaire comprend de pyrophyllite, mica et/ou silicate de zirconium.

11. Masse de revêtement selon l'une des revendications 4 à 10 qui comprend en outre un liant.

12. Masse de revêtement selon la revendication 11 où le liant comprend de l'amidon.

13. Masse de revêtement selon l'une des revendications 4 à 8 qui comprend en outre un vitrifiant et un modificateur de réseau.

14. Masse de revêtement selon la revendication 13 où le vitrifiant comprend SiO₂ et Al₂O₃ et le modificateur de réseau est choisi parmi Na₂O, K₂O, CaO, BaO, Li₂O, MgO, ZnO, PbO et SrO.

15. Masse de revêtement selon l'une des revendications 4 à 8 qui comprend en outre un matériau argileux coloré.

16. Masse de revêtement selon l'une des revendications 4 à 15 qui comprend en outre un additif choisi parmi les agents de suspension, les mouillants et les dispersants, les agents de fixation et/ou les biocides.

17. Procédé de production d'une masse de revêtement selon l'une des revendications 4 à 16 **caractérisé en ce qu'**un additif rhéologique selon l'une des revendications 1 à 3 est introduit dans un liquide support.

18. Procédé de revêtement de corps poreux avec une masse de revêtement comprenant les étapes :
a) préparation d'une masse de revêtement selon l'une des revendications 4 à 16 ;
b) application de la masse de revêtement sur un corps poreux ; et
c) séchage du corps poreux revêtu.

19. Procédé selon la revendication 18 où le corps poreux est un noyau ou un moule destiné à être utilisé en fonderie.

20. Procédé selon la revendication 18 où le corps poreux est un tesson brut céramique.

21. Procédé selon la revendication 18 où le corps poreux est un cartonnage ou un papier.

22. Procédé selon l'une des revendications 18 à 21 où l'application de la composition sur le corps poreux a lieu par immersion.

23. Corps poreux revêtu sur lequel a été appliquée une masse de revêtement selon l'une des revendications 4 à 16.

24. Corps poreux revêtu selon la revendication 23 sur lequel la masse de revêtement a été appliquée par immersion.

25. Utilisation d'une masse de revêtement selon l'une des revendications 4 à 16 pour revêtir un corps poreux.

26. Utilisation selon la revendication 25 où le corps poreux est un noyau ou un moule destiné à être utilisé en fonderie.

27. Utilisation selon la revendication 25 où le corps poreux est un tesson brut céramique.

28. Utilisation selon la revendication 25 où le corps poreux est un cartonnage ou un papier.

29. Utilisation d'un additif rhéologique selon l'une des revendications 1 à 3 pour commander le comportement d'application d'une masse de revêtement pour corps poreux.
